# EUROPEAN PATENT SPECIFICATION

(11) **EP 3 472 449 B1**
(45) Date of publication and mention of the grant of the patent: **22.04.2020**
(21) Application number: 17733068.5
(22) Date of filing: 19.06.2017
(51) Int. Cl.: F02D 41/08, F02D 41/04, F02D 41/24, F02D 41/34, F02D 41/40, F02D 41/00

(54) **METHOD AND SYSTEM FOR CONTROLLING THE AMOUNT OF FUEL IN CONNECTION TO OPERATING AN INTERNAL COMBUSTION ENGINE**
VORRICHTUNG UND SYSTEM ZUR STEUERUNG DER MENGE DES KRAFTSTOFFS IM ZUSAMMENHANG MIT DEM BETRIEB EINES VERBRENNUNGSMOTORS
PROCÉDÉ ET SYSTÈME DE COMMANDE DE LA QUANTITÉ DE CARBURANT EN LIAISON AVEC LE FONCTIONNEMENT D'UN MOTEUR À COMBUSTION INTERNE

(30) Priority: 21.06.2016 SE 1650871
(43) Date of publication of application: 24.04.2019
(73) Proprietor: Scania CV AB, 151 87 Södertälje (SE)
(72) Inventor: JACOBSSON, Susanna, 141 31 Huddinge (SE); GUSTAVSSON, Andreas, 126 55 Hägersten (SE)
(74) Representative: Scania CV AB
(86) International application number: PCT/SE2017/050662
(87) International publication number: WO 2017/222454

(56) References cited:
- EP-A2- 0 059 586
- DE-A1-102004 049 484
- US-A- 5 357 912
- US-A- 5 605 045
- US-A- 6 092 504

## Description

### TECHNICAL FIELD

The invention relates to a method for controlling the amount of fuel in connection to operating an internal combustion engine based upon engine boost pressure and engine operational conditions according to claim 1. The invention also relates to a system for controlling the amount of fuel in connection to operating an internal combustion engine based upon engine boost pressure and engine operational conditions. The invention also relates to a vehicle. The invention in addition relates to a computer program and a computer program product.

### BACKGROUND ART

During engine operation of an internal combustion engine the amount of fuel to be injected into a combustion chamber is determined based upon certain parameters comprising e.g. number of revolutions of the engine and required load. An excessive amount of fuel may result in generation of soot and unburnt components increasing such that a smoke limit is exceeded. It is thus desired to control the amount of fuel in connection to operating an internal combustion engine such that sufficient amount of fuel for good driveability is provided without exceeding the smoke limit.

In connection to engine operation involving demanded torque from engine speed with an initially low boost pressure a map function in which a highest allowable amount of fuel to be injected for acceptable driveability without discharging/emitting an amount of smoke from the engine exceeding an allowable amount. Such a map function generally refers to the fuel amount as a function of engine speed and relates to ambient pressure and boost pressure. In engines having a throttle valve it can be difficult to obtain an acceptable compromise between drivability and emitted smoke when the throttle valve is used. In order to secure acceptable drivability without exceeding the smoke limit when the throttle valve is used, i.e. during throttling, switching to a second map function providing a lower initial amount of fuel is performed, wherein, when throttle valve is disconnected, a switch back to the normal map function is performed.

A problem with such a solution is that calibration of two separate map functions and a switching/ramping time between the map function is required, which is difficult to optimize. Further, no care is taken to changes in friction losses, cooling losses and pump losses which may affect drivability and smoke emissions depending on e.g. operational conditions and surrounding conditions.

EP1479899 discloses a method for optimizing the amount of fuel at the same time as the discharged smoke is kept within allowable limits. Temperature depending map functions are used.

US 6 092 504 A is describing a method and a system for controlling a maximal quantity of fuel for an engine in an idle operation.

There is however a need for improving controlling the amount of fuel in connection to operating an internal combustion engine, particularly in connection to low and negative boost pressures.

### OBJECTS OF THE INVENTION

An object of the present invention is to provide a method for improving controlling the amount of fuel in connection to operating an internal combustion engine based upon engine boost pressure and engine operational conditions which more efficiently facilitates securing correct amount of fuel during situations with low and negative boost pressures so as to optimize driveability without exceeding smoke limit.

Another object of the present invention is to provide a system for improving controlling the amount of fuel in connection to operating an internal combustion engine based upon engine boost pressure and engine operational conditions which more efficiently facilitates securing correct amount of fuel during situations with low and negative boost pressures so as to optimize driveability without exceeding smoke limit.

### SUMMARY OF THE INVENTION

These and other objects, apparent from the following description, are achieved by a method, a system, a vehicle, a computer program and a computer program product, as set out in the appended independent claims. Preferred embodiments of the method and the system are defined in appended dependent claims.

Specifically an object of the invention is achieved by a method for controlling the amount of fuel in connection to operating an internal combustion engine based upon engine boost pressure and engine operational conditions using a map function. The engine operational conditions comprise engine speed and ambient air pressure. The method comprises the steps of: for low and/or negative engine boost pressures using a map function specifying torque values so as to determine an available torque based upon an exhaust gas smoke limit taking driveability into account; and determining a maximum allowable fuel amount based upon said determined available torque considering losses and combustion efficiency.

The map function specifying torque values may be any suitable function for facilitating determining available torque based upon an exhaust gas smoke limit taking driveability into account. The map function specifying torque values comprises according to an embodiment information about available/allowable torques for such different low and negative engine boost pressures and different engine speeds so as to not exceed a smoke limit taking driveability into account. The map function specifying torque values comprises according to an embodiment data of torque values corresponding to available torque for different low and negative engine boost pressures and different engine speeds obtained from test with the engine involving determining smoke, particles, gaseous emissions for determining smoke limits for different torques at said different engine speeds for low/negative boost pressures. The map function specifying torque values takes ambient air pressure into account.

Hereby securing correct amount of fuel during situations with low and negative boost pressures so as to optimize driveability without exceeding smoke limit may be obtained more efficiently in that no calibration of two separate map functions and thus no optimization of switching/ramping time between the map function is required. By thus using a map function specifying torque values determination of fuel amounts taking losses such as friction losses, cooling losses and pump losses and combustion efficiency into consideration is facilitated such that the amount of fuel used for optimizing drivability without exceeding the smoke limit will be accurate independent of e.g. engine temperature or varying losses.

According to an embodiment the method comprises the step of determining whether the current situation constitutes a situation where the boost pressure is low and/or negative. According to an embodiment the step of determining whether the current situation constitutes a situation where the boost pressure is low and/or negative is performed prior to performing the method according to the present invention.

If it is determined that the current situation constitutes a situation where the boost pressure is low and/or negative the method steps according to the present invention are applied, i.e. using a map function specifying torque values so as to determine an available torque based upon an exhaust gas smoke limit taking driveability into account; and determining a maximum allowable fuel amount based upon said determined available torque considering losses and combustion efficiency.

If it is determined that the current situation constitutes a situation where the boost pressure is not low or negative, i.e. if the engine is not naturally aspirated, so that it is determined that the boost pressure is above a certain pressure level the amount of fuel may be determined in any suitable way comprising e.g. determining the required amount of fuel based upon the lambda value, i.e. the air/fuel relationship, where boost pressure and ambient pressure may be used as initial parameters.

The step of determining whether the current situation constitutes a situation where the boost pressure is low and/or negative comprises determining whether engine is operating at idle speed.

The step of determining whether the current situation constitutes a situation where the boost pressure is low and/or negative comprises determining whether engine is operating by means of motoring.

The step of determining whether the current situation constitutes a situation where the boost pressure is low and/or negative comprises determining whether engine is naturally aspirated.

The step of determining whether the current situation constitutes a situation where the boost pressure is low and/or negative comprises detecting the boost pressure.

The step of determining whether the current situation constitutes a situation where the boost pressure is low and/or negative comprises determining whether a throttle function is activated.

The map function specifying torque values is configured to specify the torque values based upon the engine speed and boost pressure.

According to an embodiment the method further comprises the steps of: determining a current engine boost pressure; determining a current ambient pressure; choosing the lowest pressure of the thus determined pressures; and feeding said lowest pressure to said map function for determining said available torque. Hereby an even more accurate determination of amount of fuel is obtained in that care is taken to e.g. different ambient air pressures due to altitude and/or low/negative pressure due to activation of a throttle function by means of a throttle valve.

According to an embodiment of the method said operational conditions comprise use of a throttle function for limiting air supply for engine air boost.

According to an embodiment of the method said losses comprises pump losses, cooling losses and friction losses.

According to an embodiment the method thus comprises the step of determining a maximum allowable fuel amount based upon said determined available torque considering pump losses, cooling losses and friction losses and combustion efficiency, wherein the amount of fuel is obtained e.g. by calculation means using the losses from the torque value and the thus obtained torque with the combustion efficiency. According to an embodiment the method comprises the steps of: using the map function specifying torque values and a map function suitable for positive boost pressures for both low/negative boost pressures, i.e. naturally aspirated engine, and positive boost pressures for determining a maximum allowable fuel amount; comparing the amount of fuel determined by means of the map function specifying torque values and the map function suitable for positive boost pressures; and choosing the highest of the amounts of fuel compared. Hereby it is not necessary to determine whether the current situation constitutes a situation where the boost pressure is low and/or negative.

The method thus comprises the step of, for low and/or negative engine boost pressures, using a map function specifying torque values so as to determine an available torque based upon an exhaust gas smoke limit. This so as to obtain good driveability without exceeding said exhaust gas smoke limit.

The step of determining a maximum allowable fuel amount based upon said determined available torque considering losses and combustion efficiency comprises the step of determining a maximum allowable fuel amount based upon said determined available torque, losses and combustion efficiency.

The step of determining a maximum allowable fuel amount based upon said determined available torque, losses and combustion efficiency comprises the step of subtracting said losses from said determined available torque and then dividing it with said combustion efficiency.

According to an embodiment the method further comprises the step of determining losses. The step of determining losses is according to an embodiment performed by means of a test cell arrangement. One or more sensors are according to an embodiment arranged to provide information in order to determine said losses. The test cell arrangement runs tests for said losses within a wide range of situations/conditions. Thus, the step of determining losses is according to an embodiment performed by means of a test cell arrangement, wherein losses for current situation/conditions are determined based on results from said test cell arrangement and current situation/ current conditions from said sensors.

According to an embodiment the step of determining losses comprises the step of determining cooling losses. The step of determining cooling losses is according to an embodiment performed by means of a test cell arrangement. One or more sensors are according to an embodiment arranged to provide information in order to determine said cooling losses. The test cell runs tests within a wide temperature range as a basis for determining said cooling losses. Thus, the step of determining cooling losses is according to an embodiment performed by means of a test cell arrangement, wherein cooling losses for current situation/conditions are determined based on results from said test cell arrangement and current situation/ current conditions from said sensors.

According to an embodiment the step of determining losses comprises the step of determining friction losses. The step of determining friction losses is according to an embodiment performed by means of a test cell arrangement.

One or more sensors are according to an embodiment arranged to provide information in order to determine said friction losses. The test cell runs tests within a wide temperature range as a basis for determining said friction losses. Thus, the step of determining friction losses is according to an embodiment performed by means of a test cell arrangement, wherein friction losses for current situation/conditions are determined based on results from said test cell arrangement and current situation/ current conditions from said sensors.

According to an embodiment the step of determining losses comprises the step of determining pump losses. The step of determining pump losses is according to an embodiment performed by means of a test cell arrangement. One or more sensors are according to an embodiment arranged to provide information in order to determine said pump losses. Thus, the step of determining pump losses is according to an embodiment performed by means of a test cell arrangement, wherein pump losses for current situation/conditions are determined based on results from said test cell arrangement and current situation/ current conditions from said sensors.

According to an embodiment the method further comprises the step of determining said combustion efficiency. The step of determining said combustion efficiency losses is according to an embodiment performed by means of a test cell arrangement. The test cell arrangement runs tests for said combustion efficiency within a wide range of situations/conditions. Thus, the step of determining combustion efficiency is according to an embodiment performed by means of a test cell arrangement, wherein combustion efficiency for current situation/conditions are determined based on results from said test cell arrangement and current situation/ current conditions from said sensors.

Specifically an object of the invention is achieved by a system for controlling the amount of fuel in connection to operating an internal combustion engine based upon engine boost pressure and engine operational conditions. The engine operational conditions comprise engine speed and ambient air pressure. The system comprises means for, for low and/or negative engine boost pressures, using a map function specifying torque values so as to determine an available torque based upon an exhaust gas smoke limit taking driveability into account; and means for determining a maximum allowable fuel amount based upon said determined available torque considering losses and combustion efficiency.

According to an embodiment the system further comprises means for determining a current engine boost pressure; means for determining a current ambient pressure; means for choosing the lowest pressure of the thus determined pressures; said lowest pressure being arranged to be fed to said map function for determining said available torque.

According to an embodiment of the system said operational conditions comprise use of a throttle function for limiting air supply to the engine.

According to an embodiment of the system said losses comprises pump losses, cooling losses and friction losses.

The system for controlling the amount of fuel in connection to operating an internal combustion engine is adapted to perform the method as set out herein.

The system according to the invention has the advantages according to the corresponding method.

Specifically an object of the invention is achieved by a vehicle comprising a system according to the invention as set out herein.

Specifically an object of the invention is achieved by a computer program for controlling the amount of fuel in connection to operating an internal combustion engine, said computer program comprising program code which, when run on an electronic control unit or another computer connected to the electronic control unit, causes the electronic control unit to perform the method according to the invention.

Specifically an object of the invention is achieved by a computer program product comprising a digital storage medium storing the computer program.

### BRIEF DESCRIPTION OF THE DRAWINGS

For a better understanding of the present invention reference is made to the following detailed description when read in conjunction with the accompanying drawings, wherein like reference characters refer to like parts throughout the several views, and in which:
Fig. 1 schematically illustrates a side view of a vehicle according to the present invention;
Fig. 2 schematically illustrates a turbocharged diesel engine;
Fig. 3 schematically illustrates a system for controlling the amount of fuel in connection to operating an internal combustion engine according to an embodiment of the present invention;
Fig. 4 schematically illustrates a system for controlling the amount of fuel in connection to operating an internal combustion engine according to an embodiment of the present invention;
Fig. 5 schematically illustrates a block diagram of a method for controlling the amount of fuel in connection to operating an internal combustion engine according to an embodiment of the present invention; and
Fig. 6 schematically illustrates a computer according to an embodiment of the present invention.

### DETAILED DESCRIPTION

Hereinafter the term "link" refers to a communication link which may be a physical connector, such as an optoelectronic communication wire, or a non-physical connector such as a wireless connection, for example a radio or microwave link.

Hereinafter the term "means for" e.g. in relation to "means for, for low and/or negative engine boost pressures, using a map function specifying torque values so as to determine an available torque based upon an exhaust gas smoke limit taking driveability into account", "means for determining a maximum allowable fuel amount based upon said determined available torque considering losses and combustion efficiency", and refers to "means adapted for".

Hereinafter the term "good driveability" refers to an even initial torque build up by means of injected fuel up from a demanded torque.

Hereinafter the term "taking driveability into account" in connection to, for low and/or negative engine boost pressures, using a map function specifying torque values so as to determine an available torque based upon an exhaust gas smoke limit refers to providing good driveability without exceeding an exhaust gas smoke limit.

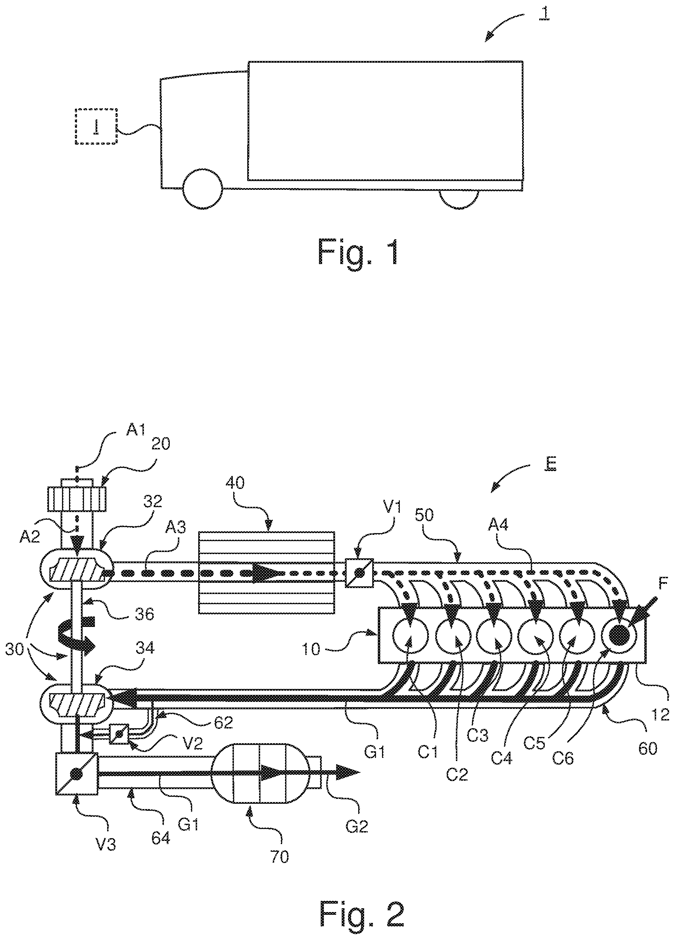

The engine according to the present invention could be any suitable internal combustion engine with any suitable number of cylinders. The internal combustion engine according to the present invention could for example be a 5-cylinder engine, a 6-cylinder engine or an 8-cylinder engine. The cylinders could be in any suitable alignment, for example inline engine or a V-engine. In fig. 2 an embodiment for a 6-cylinder engine is described. The internal combustion engine according to the present invention could be any supercharged internal combustion engine such as a turbocharged internal combustion engine.

Fig. 1 schematically illustrates a side view of a vehicle 1 according to the present invention. The exemplified vehicle 1 is a heavy vehicle in the shape of a truck. The vehicle according to the present invention could be any suitable vehicle such as a bus or a car. The vehicle is driven by means of an internal combustion engine being supercharged by means of a compressor configured to compress air into the cylinders of the engine. The vehicle is according to an embodiment driven by means of an internal combustion engine being turbocharged by means of a turbo compressor configured to compress air into the cylinders of the engine. The vehicle comprises according to an embodiment a combustion engine control system having an exhaust gas limiting function for limiting exhaust gas smoke during combustion by limiting the allowable amount of fuel to the cylinders when applicable.

The vehicle 1 comprises a system I for controlling the amount of fuel in connection to operating an internal combustion engine.

Fig. 2 schematically illustrates a turbocharged diesel engine E.

In this example an engine E with six cylinders C1, C2, C3, C4, C5, C6 is shown. The engine E comprises an engine block 12 for housing the cylinders and other engine operation components.

The engine E is arranged to provide strokes. The strokes provided by the engine constitutes according to an embodiment a four stroke cycle.

The strokes comprise an intake stroke filling the respective cylinder C1-C6 with air, a compression stroke where the air is compressed and at the end of which fuel is injected for combustion, here illustrated with injection of fuel F into cylinder C6, an expansion stroke where the combustion is completed and an exhaust stroke.

The engine E further comprises an air filter 20 through which ambient air A1 is arranged to pass so that filtered air A2 is obtained. The pressure of the ambient air A1 may vary. The pressure of the ambient air A1 will at high altitudes be significantly lower.

The engine E comprises a turbocharger 30 having a compressor 32, a turbine 34 and a shaft 36 operably connecting the compressor 32 and turbine 36. The compressor 32 is arranged to compress the filtered air A2 so that compressed air A3 is obtained. The pressure of the air A3 having passed the compressor is also called boost pressure.

The engine E comprises an intercooler 40 for cooling the compressed air A3 such that cooled compressed air A4 is obtained.

The engine E comprises an intake manifold 50 for distributing the air, i.e. the compressed air A4 to the cylinders C1-C6.

The engine E comprises a throttle valve V1 arranged to control the distribution of air A4 to the cylinders C1-C6. The throttle valve V1 is thus when activated arranged to provide a throttle function for limiting air supply to the engine. Activating the throttle valve V1 to a certain degree, i.e. closing the throttle valve V1 to a certain level will result in a negative boost pressure.

The engine E comprises an exhaust manifold 60 for distributing exhaust gas G1 from the cylinders C1-C6 to the turbine 34, the exhaust gas being arranged to pass the turbine 34 for operating the turbocharger 30 such that the compressor 32 compresses the filtered air A2.

The exhaust manifold 60 comprises a waste gate 62 for allowing exhaust gas to bypass the turbine 34 and further to the exhaust pipe 64. The engine E comprises a valve V2 arranged to control the distribution of exhaust gas through the waste gate 62.

The engine E comprises an exhaust brake V3 arranged downstream of the turbine and downstream of the waste gate. When activated, the exhaust brake V3 is configured to provide an exhaust back pressure by rendering exhaust gas flow through the exhaust pipe 64 more difficult. The exhaust back pressure is used for braking the engine speed. The exhaust back pressure thus created increases engine temperature due to the thus increased load. The exhaust back pressure may be used for increasing engine temperature and exhaust gas temperature, this being used at low engine speeds as the exhaust gases at low engine speeds do not reach high enough temperatures in order for the exhaust treatment to function efficiently. The exhaust brake V3 comprises a valve configuration for controlling the exhaust gas flow through the exhaust pipe 64. The exhaust brake V3 may also be used for braking the engine and/or reduce the engine speed.

The engine E comprises an exhaust treatment system 70 arranged to treat the exhaust gas in order to reduce emissions so that treated exhaust gases G2 exits the exhaust gas pipe 64.

Fig. 2 thus illustrates the gas flow through the turbocharged diesel engine E. Ambient air A1 enters through the air filter 20, is compressed in the compressor 32 and led through the intercooler 40 to the intake manifold 50 before entering the cylinders C1-C6. Fuel F is added by injection into the cylinders and after combustion, the exhaust gas G1 pass through the turbine 34 to the exhaust treatment system 70.

The present invention relates to controlling the amount of fuel in connection to operating such an internal combustion engine E based upon engine boost pressure and engine operational conditions using a map function. The engine operational conditions comprise engine speed and ambient air pressure.

For low and/or negative engine boost pressures a map function specifying torque values for such air pressure conditions and engine speeds is used, so as to determine an available torque based upon an exhaust gas smoke limit taking driveability into account. A maximum allowable fuel amount is determined based upon said determined available torque considering losses and combustion efficiency. The losses comprises pump losses, cooling losses and friction losses.

The lowest pressure of the boost pressure and the ambient air pressure is used for determining the available/allowable torque by means of said map function.

Thus, a current engine boost pressure and a current ambient pressure are determined, wherein the lowest pressure of the thus determined pressures is chosen. The lowest pressure is fed to said map function for determining said available torque.

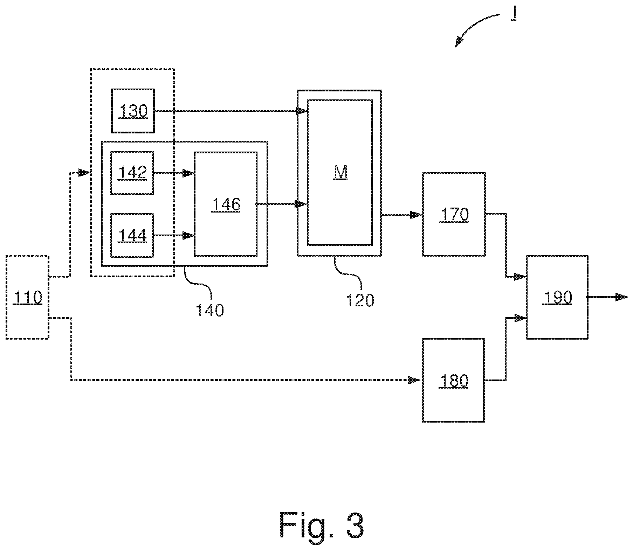

Fig. 3 schematically illustrates a system I for controlling the amount of fuel in connection to operating an internal combustion engine according to an embodiment of the present invention.

The system I comprises a map function M specifying torque values. The map function M is arranged to be used for low and/or negative engine boost pressures.

The system I comprises according to an embodiment means 110 for determining whether the current situation constitutes a situation where the boost pressure is low and/or negative.

The system comprises means 120 for, for low and/or negative engine boost pressures, using the map function M specifying torque values so as to determine an available torque based upon an exhaust gas smoke limit taking driveability into account.

The system comprises means 120 for, for low and/or negative engine boost pressures, using the map function M specifying torque values so as to determine an available torque based upon an exhaust gas smoke limit. This so as to obtain good driveability without exceeding said exhaust gas smoke limit.

The system I comprises means 130 for determining a current engine speed.

The system comprises means 140 for determining the lowest air pressure of current boost pressure and ambient air pressure.

The means 140 for determining the lowest air pressure comprises means 142 for determining a current engine boost pressure. The means 142 for determining a current engine boost pressure may comprise any suitable pressure sensor unit. The system I thus comprises means 142 for determining a current engine boost pressure.

The means 140 for determining the lowest air pressure comprises means 144 for determining a current ambient air pressure. The means 144 for determining a current ambient air pressure may comprise any suitable pressure sensor unit. The system I thus comprises means 144 for determining a current ambient air pressure.

The system I comprises means 144 for determining a current ambient air pressure. The means 144 for determining a current ambient air pressure may comprise any suitable pressure sensor unit.

The means 140 for determining the lowest air pressure comprises means 146 for choosing the lowest pressure of the thus determined pressures. The means 146 for choosing the lowest pressure of the thus determined pressures comprises means for comparing the thus determined pressures. The system I thus comprises means for choosing the lowest pressure of the thus determined pressures.

The system I is arranged to feed said determined engine speed and said determined lowest pressure to the map function M for determining the available torque.

The system I comprises means 170 for determining a maximum allowable fuel amount based upon said determined available torque considering losses and combustion efficiency.

The means 170 for determining a maximum allowable fuel amount based upon said determined available torque considering losses and combustion efficiency is arranged to determine a maximum allowable fuel amount based upon said determined available torque, losses and combustion efficiency is arranged to determine.

The system I thus comprises means 170 for determining a maximum allowable fuel amount based upon said determined available torque, losses and combustion efficiency.

The means 170 for determining a maximum allowable fuel amount based upon said determined available torque, losses and combustion efficiency comprises means for calculating the maximum allowable fuel amount based upon said determined available torque, losses and combustion efficiency. The means for calculating the maximum allowable fuel amount is arranged to subtract losses from said determined available torque and then dividing the subtracted available torque with the combustion efficiency.

According to an embodiment of the system said losses comprises pump losses, cooling losses and friction losses.

The system I comprises means 180 for, for normal and high boost pressures, determining a maximum allowable fuel amount based upon an exhaust gas smoke limiting function. Said means 180 for, for normal and high boost pressures, for determining a maximum allowable fuel amount may comprise means for determining the fuel amount based upon the lambda value, i.e. the fuel/air-relationship. With normal and high boost pressures is here intended situations when the engine is not naturally aspirated.

According to an embodiment the system I comprises means 190 for determining the highest amount of the maximum amount of fuel determined by means of the means 170 using the map function M and the maximum amount of fuel determined by means of the means 180, wherein the highest of those determined maximum amount of fuel is used for fuel injection.

According to an embodiment the system I does not have the means 110. According to this embodiment the means 170 using the map function M and the means 180 both are arranged to continuously or intermittently determine the amount of fuel based upon engine boost pressure and engine operational conditions comprising engine speed and ambient air pressure for both low and negative boost pressures, i.e. engine being naturally aspirated, and positive boost pressures, i.e. when engine is not naturally aspirated. By then determining the highest amount of the maximum amount of fuel determined by means of the means 170 using the map function M and the maximum amount of fuel determined by means of the means 180 using the means 190, the means 170 will provide the highest amount of fuel for low/negative boost pressure, i.e. naturally aspirated and the means 180 will provide the highest amount of fuel for positive boost pressures/non-naturally aspirated engine.

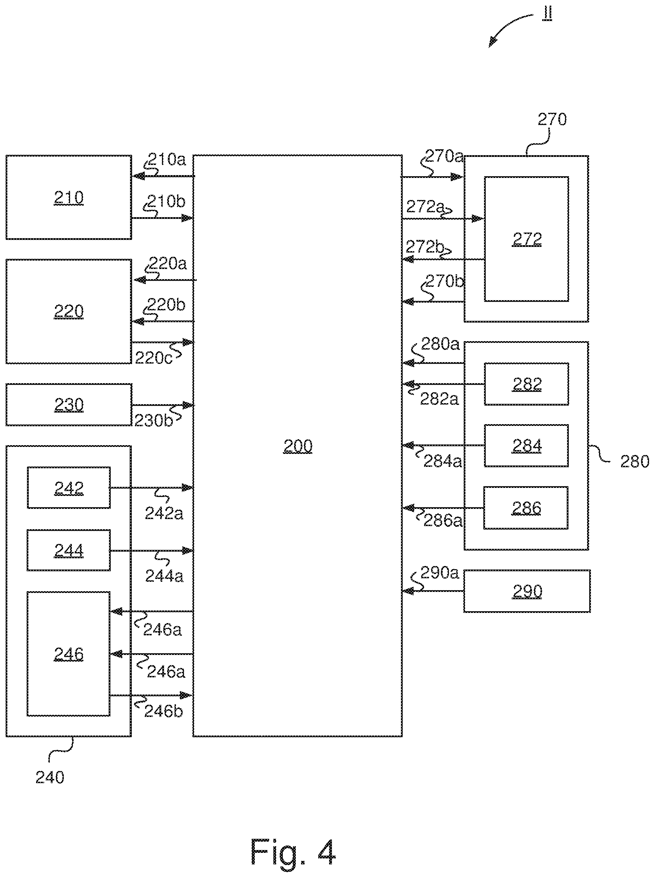

Fig. 4 schematically illustrates a system II for controlling the amount of fuel in connection to operating an internal combustion engine according to an embodiment of the present invention. The system II for controlling the amount of fuel in connection to operating an internal combustion engine is based upon engine boost pressure and engine operational conditions using a map function. According to an embodiment of the system II said operational conditions comprise use of a throttle function for limiting air supply to the engine. Use of a throttle function comprises activation of a throttle valve for limiting/preventing air supply to the cylinders of the engine.

The system II comprises an electronic control unit 200.

According to an embodiment the system II comprises means 210 for determining whether the current situation constitutes a situation where the boost pressure is low and/or negative. According to an embodiment the system II is arranged to receive information from the means for determining whether the current situation constitutes a situation where the boost pressure is low and/or negative.

The means 210 for determining whether the current situation constitutes a situation where the boost pressure is low and/or negative may comprise any suitable means.

The means 210 for determining whether the current situation constitutes a situation where the boost pressure is low and/or negative comprises means for determining whether engine is operating at idle speed.

The means 210 for determining whether the current situation constitutes a situation where the boost pressure is low and/or negative comprises means for determining whether engine is operating by means of motoring.

The means 210 for determining whether the current situation constitutes a situation where the boost pressure is low and/or negative comprises means for determining whether engine is naturally aspirated.

The means 210 for determining whether the current situation constitutes a situation where the boost pressure is low and/or negative comprises means for detecting the boost pressure.

The means 210 for determining whether the current situation constitutes a situation where the boost pressure is low and/or negative comprises means for determining whether a throttle function is activated.

The system II comprises means 220 for, for low and/or negative engine boost pressures, using a map function specifying torque values so as to determine an available torque based upon an exhaust gas smoke limit taking driveability into account.

The system II comprises means 220 for, for low and/or negative engine boost pressures, using a map function specifying torque values so as to determine an available torque based upon an exhaust gas smoke limit. This so as to obtain good driveability without exceeding said exhaust gas smoke limit.

The system II comprises means 230 for determining a current engine speed. The means 230 for determining a current engine speed may comprise any suitable engine speed sensor unit.

The system comprises means 240 for determining the lowest air pressure of current boost pressure and ambient air pressure.

The means 240 for determining the lowest air pressure comprises means 242 for determining a current engine boost pressure. The means 242 for determining a current engine boost pressure may comprise any suitable pressure sensor unit. The system II thus comprises means 242 for determining a current engine boost pressure.

The means 240 for determining the lowest air pressure comprises means 244 for determining a current ambient air pressure. The means 244 for determining a current ambient air pressure may comprise any suitable pressure sensor unit. The system II thus comprises means 244 for determining a current ambient air pressure.

The system II comprises means 244 for determining a current ambient air pressure. The means 244 for determining a current ambient air pressure may comprise any suitable pressure sensor unit.

The means 240 for determining the lowest air pressure comprises means 246 for choosing the lowest pressure of the thus determined pressures. The means 246 for choosing the lowest pressure of the thus determined pressures comprises means for comparing the thus determined pressures. The system II thus comprises means 260 for choosing the lowest pressure of the thus determined pressures.

The system II is arranged to feed said determined engine speed and said determined lowest pressure to the map function for determining said available torque.

The system II comprises means 270 for determining a maximum allowable fuel amount based upon said determined available torque considering losses and combustion efficiency.

The means 270 for determining a maximum allowable fuel amount based upon said determined available torque considering losses and combustion efficiency is arranged to determine a maximum allowable fuel amount based upon said determined available torque, losses and combustion efficiency is arranged to determine.

The system II thus comprises means 270 for determining a maximum allowable fuel amount based upon said determined available torque, losses and combustion efficiency.

According to an embodiment of the system said losses comprises pump losses, cooling losses and friction losses.

The means 270 for determining a maximum allowable fuel amount based upon said determined available torque considering losses and combustion efficiency thus comprises thus comprises considering pump losses, cooling losses and friction losses.

The means 270 for determining a maximum allowable fuel amount based upon said determined available torque considering losses and combustion efficiency comprises calculation means 272 for calculating the maximum allowable fuel amount.

The means 272 for calculating the maximum allowable fuel amount is arranged to subtract losses from said determined available torque and then dividing the subtracted available torque with the combustion efficiency.

If it is determined with the means 210 that the current situation constitutes a situation where the boost pressure is low and/or negative the system II comprising means 220 for using a map function specifying torque values; and means 270 for determining a maximum allowable fuel amount based upon said determined available torque considering losses and combustion efficiency.

If it is determined that the current situation constitutes a situation where the boost pressure is not low or negative, i.e. if it is determined that the boost pressure is above a certain pressure level, such situations involving normal engine operation with powertrain engaged, the amount of fuel may be determined in any suitable way comprising e.g. determining the required amount of fuel based upon the lambda value.

According to an embodiment the system II further comprises means 280 for determining said losses.

The means 280 for determining losses may comprise any suitable means for determining losses, comprising means for modelling losses, means for measuring losses and/or means for detecting losses by means of any suitable sensors.

The means 280 for determining said losses comprises according to an embodiment a test cell arrangement. The means 280 for determining losses comprises according to an embodiment one or more sensors for detecting current situation/current conditions relevant for said losses. Said one or more sensors are arranged to provide information in order to determine said losses. The test cell arrangement is configured to run tests for said losses within a wide range of situations/conditions. Thus, the means 280 for determining losses comprises a test cell arrangement, wherein losses for current situation/conditions are arranged to be determined based on results from said test cell arrangement and current situation/ current conditions from said sensors.

According to an embodiment the means 280 for determining said losses comprises means 282 for determining cooling losses. The means 282 for determining cooling losses comprises according to an embodiment a test cell arrangement. The means 282 for determining cooling losses comprises according to an embodiment one or more temperature sensors for detecting for detecting current situation/current conditions relevant for said cooling losses. Said sensors are according to an embodiment arranged to provide information in order to determine said cooling losses. The test cell arrangement is configured to run tests within a wide temperature range as a basis for determining said cooling losses. Thus, the means 282 for determining cooling losses comprises a test cell arrangement, wherein cooing losses for current situation/conditions are arranged to be determined based on results from said test cell arrangement and current situation/ current conditions from said sensors.

According to an embodiment the means 280 for determining said losses comprises means 284 for determining friction losses. The means 284 for determining friction losses comprises according to an embodiment a test cell arrangement. The means 284 for determining friction losses comprises according to an embodiment one or more temperature sensors for detecting for detecting current situation/current conditions relevant for said friction losses. Said sensors are according to an embodiment arranged to provide information in order to determine said friction losses. The test cell arrangement is configured to run tests within a wide temperature range as a basis for determining said friction losses. Thus, the means 284 for determining friction losses comprises a test cell arrangement, wherein friction losses for current situation/conditions are arranged to be determined based on results from said test cell arrangement and current situation/ current conditions from said sensors.

According to an embodiment the means 280 for determining said losses comprises means 286 for determining pump losses. The means 286 for determining pump losses comprises according to an embodiment a test cell arrangement. The means 286 for determining pump losses comprises according to an embodiment one or more sensors for detecting for detecting current situation/current conditions relevant for said pump losses. Said sensors are according to an embodiment arranged to provide information in order to determine said pump losses. Thus, the means 286 for determining pump losses comprises a test cell arrangement, wherein pump losses for current situation/conditions are arranged to be determined based on results from said test cell arrangement and current situation/ current conditions from said sensors.

According to an embodiment the system II further comprises means 290 for determining said combustion efficiency. The means 290 for determining said combustion efficiency according to an embodiment a test cell arrangement. The means 290 for determining combustion efficiency comprises according to an embodiment one or more sensors for detecting for detecting current situation/current conditions relevant for said combustion efficiency. Said sensors are according to an embodiment arranged to provide information in order to determine said combustion efficiency. Thus, the means 290 for determining combustion efficiency comprises a test cell arrangement, wherein combustion efficiency for current situation/conditions are arranged to be determined based on results from said test cell arrangement and current situation/ current conditions from said sensors.

The electronic control unit 200 is operably connected to the means 210 for determining whether the current situation constitutes a situation where the boost pressure is low and/or negative via a link 210a. The electronic control unit 200 is via the link 210a arranged to send a signal to said means 210 representing data for boost pressure for the current situation.

The electronic control unit 200 is operably connected to the means 210 for determining whether the current situation constitutes a situation where the boost pressure is low and/or negative via a link 210b. The electronic control unit 200 is via the link 210b arranged to receive a signal from said means 210 representing data for current situation boost being a situation where the boost pressure is low and/or negative.

The electronic control unit 200 is operably connected to the means 230 for determining a current engine speed via a link 230a. The electronic control unit 200 is via the link 230a arranged to receive a signal from said means 230 representing data for engine speed.

The electronic control unit 200 is operably connected to the means 242 for determining a current engine boost pressure via a link 242a. The electronic control unit 200 is via the link 242a arranged to send a signal to said means 242 representing data for current boost pressure.

The electronic control unit 200 is operably connected to the means 244 for determining a current ambient air pressure via a link 244a. The electronic control unit 200 is via the link 244a arranged to send a signal to said means 244 representing data for current ambient air pressure.

The electronic control unit 200 is operably connected to the means 246 for choosing the lowest pressure of the thus determined pressures via a link 246a. The electronic control unit 200 is via the link 246a arranged to receive a signal from said means 246 representing data for lowest air pressure.

The electronic control unit 200 is operably connected to the means 220 for, for low and/or negative engine boost pressures, using a map function specifying torque values so as to determine an available torque based upon an exhaust gas smoke limit taking driveability into account via a link 220a. The electronic control unit 200 is via the link 220a arranged to send a signal to said means 220 representing data for engine speed.

The electronic control unit 200 is operably connected to the means 220 for, for low and/or negative engine boost pressures, using a map function specifying torque values so as to determine an available torque based upon an exhaust gas smoke limit taking driveability into account via a link 220b. The electronic control unit 200 is via the link 220b arranged to send a signal to said means 220 representing data for lowest pressure of current boost pressure and ambient air pressure.

The electronic control unit 200 is operably connected to the means 220 for, for low and/or negative engine boost pressures, using a map function specifying torque values so as to determine an available torque based upon an exhaust gas smoke limit taking driveability into account via a link 220c. The electronic control unit 200 is via the link 220c arranged to receive a signal from said means 220 representing data for torque values.

The electronic control unit 200 is operably connected to the means 270 for determining a maximum allowable fuel amount based upon said determined available torque considering losses and combustion efficiency via a link 270a. The electronic control unit 200 is via the link 270a arranged to send a signal to said means 270 representing data for torque values.

The electronic control unit 200 is operably connected to the means 270 for determining a maximum allowable fuel amount based upon said determined available torque considering losses and combustion efficiency via a link 270b. The electronic control unit 200 is via the link 270b arranged to receive a signal from said means 270 representing data for fuel amount.

The electronic control unit 200 is operably connected to the calculation means 272 via a link 272a. The electronic control unit 200 is via the link 272a arranged to send a signal to said means 272 representing data for losses comprising data for pump losses, data for cooling losses and data for friction losses, and data for combustion efficiency.

The electronic control unit 200 is operably connected to the calculation means 272 for subtracting the losses from the torque value and dividing the thus obtained torque with the combustion efficiency via a link 272b. The electronic control unit 200 is via the link 272b arranged to receive a signal from said means 272 representing data for fuel amount considering losses comprising pump losses, cooling losses and friction losses, and combustion efficiency.

The electronic control unit 200 is operably connected to the means 280 for determining losses via a link 280a. The electronic control unit 200 is via the link 280a arranged to receive a signal from said means 280 representing data for losses.

The electronic control unit 200 is operably connected to the means 282 for determining cooling losses via a link 282a. The electronic control unit 200 is via the link 282a arranged to receive a signal from said means 282 representing data for cooling losses.

The electronic control unit 200 is operably connected to the means 284 for determining friction losses via a link 284a. The electronic control unit 200 is via the link 284a arranged to receive a signal from said means 284 representing data for friction losses.

The electronic control unit 200 is operably connected to the means 286 for determining pump losses via a link 286a. The electronic control unit 200 is via the link 286a arranged to receive a signal from said means 286 representing data for pump losses.

The electronic control unit 200 is operably connected to the means 290 for determining combustion efficiency via a link 290a. The electronic control unit 200 is via the link 290a arranged to receive a signal from said means 290 representing data for combustion efficiency.

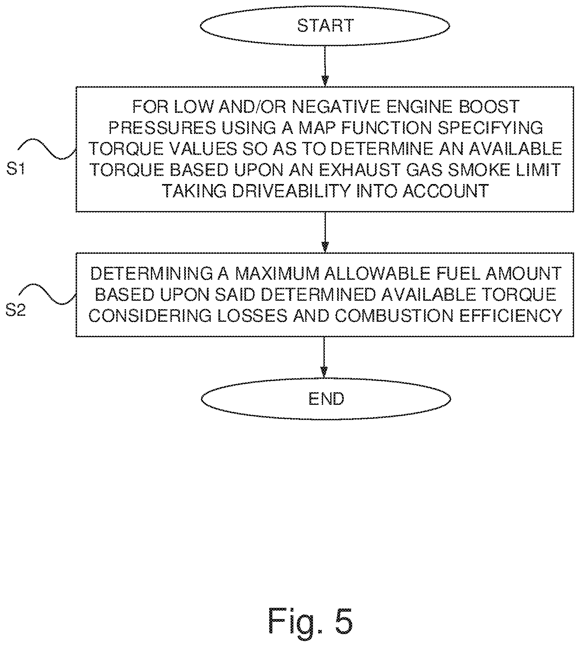

Fig. 5 schematically illustrates a block diagram of a method for controlling the amount of fuel in connection to operating an internal combustion engine based upon engine boost pressure and engine operational conditions using a map function according to an embodiment of the present invention. The engine operational conditions comprise engine speed and ambient air pressure.

According to the embodiment the method for controlling the amount of fuel in connection to operating an internal combustion engine comprises a step S1. In this step, for low and/or negative engine boost pressures, a map function specifying torque values is used.

According to the embodiment the method for controlling the amount of fuel in connection to operating an internal combustion engine comprises a step S2. In this step a maximum allowable fuel amount is determined based upon said determined available torque considering losses and combustion efficiency.

Hereby securing correct amount of fuel during situations with low and negative boost pressures so as to optimize driveability without exceeding smoke limit may be obtained more efficiently in that no calibration of two separate map functions and thus no optimization of switching/ramping time between the map function is required. By thus using a map function specifying torque values determination of fuel amounts taking losses such as friction losses, cooling losses and pump losses into consideration is facilitated such that the amount of fuel used for optimizing drivability without exceeding the smoke limit will be accurate independent of e.g. engine temperature or varying losses.

The map function specifying torque values may be any suitable function for facilitating determining available torque based upon an exhaust gas smoke limit taking driveability into account. The map function specifying torque values comprises according to an embodiment information about available/allowable torques for such different low and negative engine boost pressures and different engine speeds so as to not exceed a smoke limit taking driveability into account. The map function specifying torque values comprises according to an embodiment data of torque values corresponding to available torque for different low and negative engine boost pressures and different engine speeds obtained from test with the engine involving determining smoke, particles, gaseous emissions for determining smoke limits for different torques at said different engine speeds for low/negative boost pressures.

According to an embodiment the method comprises the step of determining whether the current situation constitutes a situation where the boost pressure is low and/or negative. According to an embodiment the step of determining whether the current situation constitutes a situation where the boost pressure is low and/or negative is performed prior to performing the method according to the present invention.

If it is determined that the current situation constitutes a situation where the boost pressure is low and/or negative the method steps according to the present invention are applied, i.e. using a map function specifying torque values; and determining a maximum allowable fuel amount based upon said determined available torque considering losses and combustion efficiency.

If it is determined that the current situation constitutes a situation where the boost pressure is not low or negative, i.e. if it is determined that the boost pressure is above a certain pressure level the amount of fuel may be determined in any suitable way comprising e.g. determining the required amount of fuel based upon the lambda value.

The step of determining whether the current situation constitutes a situation where the boost pressure is low and/or negative comprises determining whether engine is operating at idle speed.

The step of determining whether the current situation constitutes a situation where the boost pressure is low and/or negative comprises determining whether engine is operating by means of motoring.

The step of determining whether the current situation constitutes a situation where the boost pressure is low and/or negative comprises determining whether engine is naturally aspirated.

The step of determining whether the current situation constitutes a situation where the boost pressure is low and/or negative comprises detecting the boost pressure.

The step of determining whether the current situation constitutes a situation where the boost pressure is low and/or negative comprises determining whether a throttle function is activated.

The map function specifying torque values is configured to specify the torque values based upon the engine speed and boost pressure.

According to an embodiment the method further comprises the steps of: determining a current engine boost pressure; determining a current ambient pressure; choosing the lowest pressure of the thus determined pressures; and feeding said lowest pressure to said map function for determining said available torque. Hereby an even more accurate determination of amount of fuel is obtained in that care is taken to e.g. different ambient air pressures due to altitude and/or low/negative pressure due to activation of a throttle function by means of a throttle valve.

According to an embodiment of the method said operational conditions comprise use of a throttle function for limiting air supply for engine.

According to an embodiment of the method said losses comprises pump losses, cooling losses and friction losses.

According to an embodiment the method thus comprises the step of determining fuel amounts based upon said torque values considering pump losses, cooling losses and friction losses and combustion efficiency, wherein the amount of fuel is obtained e.g. by calculation means using the losses from the torque value and the thus obtained torque and the combustion efficiency.

The method and the method steps described above with reference to fig. 5 are according to an embodiment performed with the system I according to fig. 4.

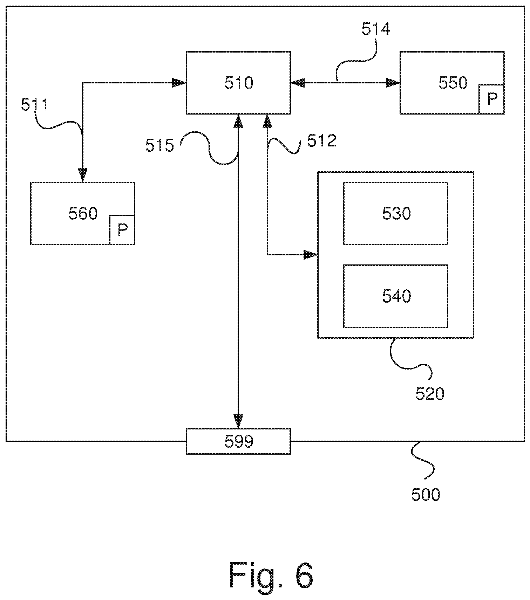

With reference to figure 6, a diagram of an apparatus 500 is shown. The system I; II described with reference to fig. 3 and 4 may according to an embodiment comprise apparatus 500. Apparatus 500 comprises a non-volatile memory 520, a data processing device 510 and a read/write memory 550. Non-volatile memory 520 has a first memory portion 530 wherein a computer program, such as an operating system, is stored for controlling the function of apparatus 500. Further, apparatus 500 comprises a bus controller, a serial communication port, I/O-means, an A/D-converter, a time date entry and transmission unit, an event counter and an interrupt controller (not shown). Non-volatile memory 520 also has a second memory portion 540.

A computer program P is provided comprising routines for controlling the amount of fuel in connection to operating an internal combustion engine based upon engine boost pressure and engine operational conditions using a map function. The engine operational conditions comprise engine speed and ambient air pressure. The program P comprises routines for, for low and/or negative engine boost pressures using a map function specifying torque values so as to determine an available torque based upon an exhaust gas smoke limit taking driveability into account. The program P comprises routines for determining a maximum allowable fuel amount based upon said determined available torque considering losses and combustion efficiency. The program P comprises routines for determining a current engine boost pressure. The program P comprises routines for determining a current ambient pressure. The program P comprises routines for choosing the lowest pressure of the thus determined pressures; and feeding said lowest pressure to said map function for determining said available torque. According to an embodiment of the method said operational conditions comprise use of a throttle function for limiting air supply to the engine. According to an embodiment of the method said losses comprises pump losses, cooling losses and friction losses. The computer program P may be stored in an executable manner or in a compressed condition in a separate memory 560 and/or in read/write memory 550.

When it is stated that data processing device 510 performs a certain function it should be understood that data processing device 510 performs a certain part of the program which is stored in separate memory 560, or a certain part of the program which is stored in read/write memory 550.

Data processing device 510 may communicate with a data communications port 599 by means of a data bus 515. Non-volatile memory 520 is adapted for communication with data processing device 510 via a data bus 512. Separate memory 560 is adapted for communication with data processing device 510 via a data bus 511. Read/write memory 550 is adapted for communication with data processing device 510 via a data bus 514. To the data communications port 599 e.g. the links connected to the control units 100 may be connected.

When data is received on data port 599 it is temporarily stored in second memory portion 540. When the received input data has been temporarily stored, data processing device 510 is set up to perform execution of code in a manner described above. The signals received on data port 599 can be used by apparatus 500 for, for low and/or negative engine boost pressures using a map function specifying torque values so as to determine an available torque based upon an exhaust gas smoke limit taking driveability into account. The signals received on data port 599 can be used by apparatus 500 for determining a maximum allowable fuel amount based upon said determined available torque considering losses and combustion efficiency. The signals received on data port 599 can be used by apparatus 500 for determining a current engine boost pressure. The signals received on data port 599 can be used by apparatus 500 for determining a current ambient pressure. The signals received on data port 599 can be used by apparatus 500 for choosing the lowest pressure of the thus determined pressures; and feeding said lowest pressure to said map function for determining said available torque. According to an embodiment of the method said operational conditions comprise use of a throttle function for limiting air supply to the engine. According to an embodiment of the method said losses comprises pump losses, cooling losses and friction losses.

Parts of the methods described herein can be performed by apparatus 500 by means of data processing device 510 running the program stored in separate memory 560 or read/write memory 550. When apparatus 500 runs the program, parts of the methods described herein are executed.

The foregoing description of the preferred embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated.

## Claims

1. A method for controlling the amount of fuel in connection to operating an internal combustion engine (E) based upon engine boost pressure and engine operational conditions comprising engine speed and ambient air pressure using a map function, engine boost pressure comprising low and/or negative engine boost pressures associated with naturally aspirated engine, and normal and high engine boost pressures associated with the engine being not naturally aspirated, with the steps of:
- for low and/or negative engine boost pressures, using (S1) a map function (M) specifying torque values based upon engine speed and engine boost pressure so as to determine an available torque based upon an exhaust gas smoke limit taking driveability into account so as to obtain good driveability provided by an even initial torque build up without exceeding said exhaust gas smoke limit; and
- determining (S2) a maximum allowable fuel amount based upon said determined available torque considering losses and combustion efficiency; and,
- for normal and high engine boost pressures, determining a maximum allowable fuel amount based upon an exhaust gas smoke limiting function.

2. A method according to claim 1, further comprising the steps of: determining a current engine boost pressure; determining a current ambient pressure; choosing the lowest pressure of the thus determined pressures; and feeding said lowest pressure to said map function for determining said available torque.

3. A method according to claim 1 or 2, wherein said operational conditions comprise use of a throttle function for limiting air supply for to the engine.

4. A method according to any of claims 1-3, wherein said losses comprises pump losses, cooling losses and friction losses.

5. A system (I; II) for controlling the amount of fuel in connection to operating an internal combustion engine (E) based upon engine boost pressure and engine operational conditions, said engine operational conditions comprising engine speed and ambient air pressure, using a map function, engine boost pressure comprising low and/or negative engine boost pressures associated with naturally aspirated engine, and normal and high engine boost pressures associated with the engine being not naturally aspirated, with means (120; 220) for, for low and/or negative engine boost pressures, using a map function (M) specifying torque values based upon engine speed and engine boost pressure so as to determine an available torque based upon an exhaust gas smoke limit taking driveability into account so as to obtain good driveability provided by an even initial torque build up without exceeding said exhaust gas smoke limit; and means (170; 270) for determining a maximum allowable fuel amount based upon said determined available torque considering losses and combustion efficiency; and, means (180) for, for normal and high boost pressures, determining a maximum allowable fuel amount based upon an exhaust gas smoke limiting function.

6. A system according to claim 5, further comprising means (142; 242) for determining a current engine boost pressure; means (144; 244) for determining a current ambient pressure; means (146; 246) for choosing the lowest pressure of the thus determined pressures; said lowest pressure being arranged to be fed to said map function for determining said available torque.

7. A system according to claim 5 or 6, wherein said operational conditions comprise use of a throttle function for limiting air supply to the engine.

8. A system according to any of claims 5-7, wherein said losses comprises pump losses, cooling losses and friction losses.

9. A vehicle (1) comprising a system (I) according to any of claims 5-8.

10. A computer program (P) comprising program code which, when run on an electronic control unit (100) adapted to perform the method steps according to claim 1-4 or another computer (500) connected to the electronic control unit (100), causes the electronic control unit to perform the steps according to claim 1-4.

11. A computer program product comprising a digital storage medium storing the computer program according to claim 10.

## Patentansprüche

1. Verfahren zum Steuern der Kraftstoffmenge im Zusammenhang mit dem Betreiben eines Verbrennungsmotors (E) basierend auf Motorladedruck und Motorbetriebsbedingungen umfassend Motordrehzahl und Umgebungsluftdruck unter Verwendung einer Kennfeldfunktion, Motorladedruck umfassend niedrige und/oder negative Motorladedrücke in Verbindung mit einem selbstansaugenden Motor, und normale und hohe Motorladedrücke in Verbindung mit einem Motor, der nicht selbstansaugend ist, mit den Schritten:
- für niedrige und/oder negative Motorladedrücke, Verwenden (S1) einer Kennfeldfunktion (M), welche Drehmomentwerte basierend auf Motordrehzahl und Motorladedruck angibt, um ein verfügbares Drehmoment in Abhängigkeit einer Abgasrauchgrenze zu ermitteln unter Berücksichtigung einer Fahrbarkeit, um eine durch einen gleichmäßigen anfänglichen Drehmomentaufbau bereitgestellte, gute Fahrbarkeit zu erreichen, ohne die Abgasrauchgrenze zu überschreiten, und
- Ermitteln (S2) einer maximal zulässigen Kraftstoffmenge basierend auf dem ermittelten verfügbaren Drehmoment unter Berücksichtigung von Verlusten und einer Verbrennungseffizienz, und
- für normale und hohe Motorladedrücke, Ermitteln einer maximal zulässigen Kraftstoffmenge in Abhängigkeit einer Abgasrauchbegrenzungsfunktion.

2. Verfahren nach Anspruch 1, ferner umfassend den Schritt des Ermittelns eines aktuellen Motorladedrucks, des Ermittelns eines aktuellen Umgebungsdrucks, des Wählens des niedrigsten Drucks aus den so ermittelten Drücken, und des Zuführens dieses niedrigsten Drucks zu der Kennfeldfunktion zum Ermitteln des verfügbaren Drehmoments.

3. Verfahren nach Anspruch 1 oder 2, bei dem die Betriebsbedingungen ein Verwenden einer Drosselfunktion zum Begrenzen einer Luftzufuhr zu dem Motor umfassen.

4. Verfahren nach einem der Ansprüche 1 bis 3, bei dem die Verluste Pumpverluste, Kühlverluste und Reibverluste umfassen.

5. System (I; II) zum Steuern der Kraftstoffmenge im Zusammenhang mit einem Betreiben eines Verbrennungsmotors (E) in Abhängigkeit von Motorladedruck und Motorbetriebsbedingungen, wobei die Motorbetriebsbedingungen Motordrehzahl und Umgebungsluftdruck umfassen, unter Verwendung einer Kennfeldfunktion, wobei ein Motorladedruck niedrige und/oder negative Motorladedrücke in Verbindung mit einem selbstansaugenden Motor umfasst, und normale und hohe Motorladedrücke in Verbindung mit einem Motor, der nicht selbstansaugend ist, mit Mitteln (120; 220) zum, für niedrige und/oder negative Motorladedrücke, Verwenden einer Kennfeldfunktion (M), welche Drehmomentwerte in Abhängigkeit von Motordrehzahl und Motorladedruck angibt, um basierend auf einer Abgasrauchgrenze ein verfügbares Drehmoment zu ermitteln unter Berücksichtigung einer Fahrbarkeit, um eine durch einen gleichmäßigen anfänglichen Drehmomentaufbau bereitgestellte, gute Fahrbarkeit zu erreichen, ohne die Abgasrauchgrenze zu überschreiten, und Mitteln (170; 270) zum Ermitteln einer maximal zulässigen Kraftstoffmenge basierend auf dem ermittelten verfügbaren Drehmoment unter Berücksichtigung von Verlusten und Verbrennungseffizienz, und Mittel (180) zum, für normale und hohe Ladedrücke, Ermitteln einer maximal zulässigen Kraftstoffmenge in Abhängigkeit einer Abgasrauchbegrenzungsfunktion.

6. System nach Anspruch 5, ferner umfassend Mittel (142; 242) zum Ermitteln eines aktuellen Motorladedrucks, Mittel (144; 244) zum Ermitteln eines aktuellen Umgebungsdrucks, Mittel (146; 246) zum Auswählen des niedrigsten Drucks aus den so ermittelten Drücken, wobei der niedrigste Druck dazu eingerichtet ist, der Kennfeldfunktion zum Ermitteln des verfügbaren Drehmoments zugeführt zu werden.

7. System nach Anspruch 5 oder 6, bei dem die Betriebsbedingungen ein Verwenden einer Drosselfunktion zum Begrenzen einer Luftzufuhr zum Motor umfassen.

8. System nach einem der Ansprüche 5 bis 7, bei dem die Verluste Pumpverluste, Kühlverluste und Reibverluste umfassen,

9. Fahrzeug (1) mit einem System (I) nach einem der Ansprüche 5 bis 8.

10. Computerprogramm (P) mit Programmcode, der, wenn er auf einer elektronischen Steuereinheit (100), die zum Ausführen der Verfahrensschritte gemäß den Ansprüchen 1 bis 4 eingerichtet ist, oder einem anderen mit der elektronischen Steuereinheit (100) verbundenen Computer (500) abläuft, die elektronische Steuereinheit dazu veranlasst, die Schritte nach Anspruch 1 bis 4 auszuführen.

11. Computerprogrammprodukt mit einem digitalen Speichermedium, welches das Computerprogramm nach Anspruch 10 speichert.

## Revendications

1. Procédé de contrôle de la quantité de carburant en rapport avec le fonctionnement d'un moteur de combustion interne (E) sur base de la pression de suralimentation du moteur et des conditions de fonctionnement du moteur comprenant le régime du moteur et la pression d'air ambiant à l'aide d'une fonction cartographique, la pression de suralimentation du moteur comprenant des pressions de suralimentation basses et/ ou négatives associées au moteur aspiré naturellement, et des pressions de suralimentation normales et élevées du moteur associées au moteur n'étant pas naturellement aspiré, avec les étapes de :
- pour les pressions de suralimentation du moteur faibles et/ ou négatives, à l'aide (S1) d'une fonction cartographique (M) indiquant des valeurs de couple sur base de la vitesse du moteur et de la pression de suralimentation du moteur afin de déterminer un couple disponible sur base d'une limite de fumée de gaz d'échappement qui prend en compte la maniabilité afin pour obtenir une bonne maniabilité fournie par une accumulation de couple initiale uniforme sans dépassement de ladite limite de fumée de gaz d'échappement ; et
- la détermination (S2) d'un montant de carburant maximal admissible sur base dudit couple disponible déterminé, en tenant compte des pertes et de l'efficacité de combustion ; et,
- pour des pressions de suralimentation normales et élevées du moteur, la détermination d'un montant de carburant maximum admissible sur base d'une fonction de limitation de la fumée de gaz d'échappement.

2. Procédé selon la revendication 1, comprenant en outre les étapes de : la détermination d'une pression de suralimentation du moteur en cours, la détermination d'une pression ambiante actuelle, le choix de la pression la plus basse des pressions ainsi déterminées, et l'alimentation de ladite pression la plus basse à ladite fonction de carte pour la détermination dudit couple disponible.

3. Procédé selon la revendication 1 ou 2, dans lequel lesdites conditions de fonctionnement comprennent l'utilisation d'une fonction d'étranglement pour la limitation de l'alimentation en air pour le moteur.

4. Procédé selon l'une quelconque des revendications 1-3, dans lequel ladite perte comprend des pertes de pompe, des pertes de refroidissement et des pertes de frottement.

5. Système (I ; II) pour le contrôle de la quantité de carburant en rapport avec le fonctionnement d'un moteur à combustion interne (E) sur base de la pression de suralimentation du moteur et des conditions de fonctionnement du moteur, lesdites conditions de fonctionnement du moteur comprenant le régime du moteur et la pression de l'air ambiant, à l'aide d'une fonction cartographique, pression de suralimentation du moteur comprenant des pressions de suralimentation du moteur faibles et/ ou négatives associées au moteur à aspiration naturelle, et des pressions de suralimentation du moteur normales et élevées associées au moteur n'étant pas à aspiration naturelle, avec des moyens (120 ; 220) pour, pour les pressions de suralimentation du moteur basses et/ ou négatives, à l'aide d'une fonction cartographique (M) spécifiant des valeurs de couple sur base du régime moteur et de la pression de suralimentation du moteur afin de déterminer un couple disponible sur base d'une limite de fumée de gaz d'échappement en tenant compte de la maniabilité afin d'obtenir une bonne maniabilité fournie par un accumulation de couple initiale sans dépassement de ladite limite de fumée de gaz d'échappement ; et des moyens (170 ; 270) pour la détermination une quantité de carburant maximale admissible sur base dudit couple disponible déterminé en tenant compte des pertes et de l'efficacité de combustion ; et des moyens (180) pour, pour des pressions de suralimentation normales et élevées, la détermination d'une quantité de carburant maximale admissible sur base d'une fonction de limitation de fumée de gaz d'échappement.

6. Système selon la revendication 5, comprenant en outre des moyens (142 ; 242) pour la détermination d'une pression de suralimentation de moteur actuelle ; des moyens (144 ; 244) pour la détermination d'une pression ambiante actuelle ; des moyens (146 ; 246) pour le choix de la pression la plus basse des pressions déterminées ainsi ; ladite pression la plus basse étant agencée pour être alimentée par ladite fonction cartographique pour la détermination dudit couple disponible.

7. Système selon la revendication 5 ou 6, dans lequel lesdites conditions de fonctionnement comprennent l'utilisation d'une fonction d'étranglement pour la limitation de l'alimentation en air du moteur.

8. Système selon l'une quelconque des revendications 5-7, dans lequel lesdites pertes comprennent des pertes de pompe, des pertes de refroidissement et des pertes de frottement.

9. Véhicule à moteur (1) comprenant un système (I) selon l'une quelconque des revendications 5-8.

10. Programme informatique (P) comprenant un code de programme qui, lorsqu'il est exécuté sur une unité de commande électronique (100) adaptée pour exécuter les étapes du procédé selon les revendications 1-4 ou un autre ordinateur (500) connecté à l'unité de commande électronique (100), amène l'unité de commande électronique à exécuter les étapes selon les revendications 1-4.

11. Produit de programme informatique comprenant un support de stockage numérique stockant le programme informatique selon la revendication 10.
